# EUROPÄISCHE PATENTSCHRIFT

(11) **EP 4 356 409 B1**
(45) Veröffentlichungstag und Bekanntmachung des Hinweises auf die Patenterteilung: **02.12.2026**
(21) Anmeldenummer: 22773467.0
(22) Anmeldetag: 05.09.2022
(51) Int. Cl.: H01H 9/54, H01H 83/10, H02H 3/08, H01H 83/20

(54) **SCHUTZSCHALTGERÄT**
CIRCUIT BREAKER
DISJONCTEUR

(30) Priorität: 28.09.2021 DE 102021210818
(43) Veröffentlichungstag der Anmeldung: 24.04.2024
(73) Patentinhaber: Siemens Aktiengesellschaft, 80333 München (DE)
(72) Erfinder: TANNHÄUSER, Marvin, 91353 Hausen (DE); HEINDL, Manfred, 93087 Alteglofsheim (DE); HUSSMANN, Jörg, 92318 Neumarkt (DE)
(74) Vertreter: Siemens Patent Attorneys
(86) Internationale Anmeldenummer: PCT/EP2022/074586
(87) Internationale Veröffentlichungsnummer: WO 2023/052042

(56) Entgegenhaltungen:
- EP-A1- 2 448 075
- EP-A1- 4 091 184
- WO-A1-2006/119906
- JP-A- 2021 034 124
- US-A1- 2020 365 346

## Beschreibung

Die Erfindung betrifft das technische Gebiet eines Schutzschaltgerätes für einen Niederspannungsstromkreis mit einer elektronischen Unterbrechungseinheit.

Mit Niederspannung sind Spannungen von bis zu 1000 Volt Wechselspannung oder bis zu 1500 Volt Gleichspannung gemeint. Mit Niederspannung sind insbesondere Spannungen gemeint, die größer als die Kleinspannung, mit Werten von 50 Volt Wechselspannung bzw. 60 Volt Gleichspannung, sind.

Mit Niederspannungsstromkreis bzw. -netz oder -anlage sind Stromkreise mit Nennströmen bzw. Bemessungsströmen von bis zu 125 Ampere, spezifischer bis zu 63 Ampere gemeint. Mit Niederspannungsstromkreis sind insbesondere Stromkreise mit Nennströmen bzw. Bemessungsströmen von bis zu 50 Ampere, 40 Ampere, 32 Ampere, 25 Ampere, 16 Ampere oder 10 Ampere gemeint. Mit den genannten Stromwerten sind insbesondere Nenn-, Bemessungs- oder/und Abschaltströme gemeint, d.h. der Strom der im Normalfall maximal über den Stromkreis geführt wird bzw. bei denen der elektrische Stromkreis üblicherweise unterbrochen wird, beispielsweise durch eine Schutzeinrichtung, wie ein Schutzschaltgerät, Leitungsschutzschalter oder Leistungsschalter. Die Nennströme können sich weiter staffeln, von 0,5 A über 1 A, 2 A, 3 A, 4 A, 5 A, 6 A, 7 A, 8 A, 9 A, 10 A, usw. bis 16 A.

Leitungsschutzschalter sind seit langem bekannte Überstromschutzeinrichtungen, die in der Elektroinstallationstechnik in Niederspannungsstromkreisen eingesetzt werden. Diese schützen Leitungen vor Beschädigung durch Erwärmung infolge zu hohen Stromes und/oder Kurzschluss. Ein Leitungsschutzschalter kann den Stromkreis bei Überlast und/oder Kurzschluss selbsttätig abschalten. Ein Leitungsschutzschalter ist ein nicht selbsttätig zurückstellendes Sicherungselement.

Leistungsschalter sind, im Gegensatz zu Leitungsschutzschaltern, für Ströme größer als 125 A vorgesehen, teilweise auch schon ab 63 Ampere. Leitungsschutzschalter sind deshalb einfacher und filigraner aufgebaut. Leitungsschutzschalter weisen üblicherweise eine Befestigungsmöglichkeit zur Befestigung auf einer so genannten Hutschiene (Tragschiene, DIN-Schiene, TH35) auf.

Leitungsschutzschalter sind elektromechanisch aufgebaut. In einem Gehäuse weisen sie einen mechanischen Schaltkontakt bzw. Arbeitsstromauslöser zur Unterbrechung (Auslösung) des elektrischen Stromes auf. Üblicherweise wird ein Bimetall-Schutzelement bzw. Bimetall-Element zur Auslösung (Unterbrechung) bei länger anhaltenden Überstrom (Überstromschutz) respektive bei thermischer Überlast (Überlastschutz) eingesetzt. Ein elektromagnetischer Auslöser mit einer Spule wird zur kurzzeitigen Auslösung bei Überschreiten eines Überstromgrenzwerts bzw. im Falle eines Kurzschlusses (Kurzschlussschutz) eingesetzt. Eine oder mehrere Lichtbogenlöschkammer(n) bzw. Einrichtungen zur Lichtbogenlöschung sind vorgesehen. Ferner Anschlusselemente für Leiter des zu schützenden elektrischen Stromkreises.

Schutzschaltgeräte mit einer elektronischen Unterbrechungseinheit sind relativ neuartige Entwicklungen. Diese weisen eine halbleiterbasierte elektronische Unterbrechungseinheit auf. D.h. der elektrische Stromfluss des Niederspannungsstromkreises wird über Halbleiterbauelemente respektive Halbleiterschalter geführt, die den elektrischen Stromfluss unterbrechen bzw. leitfähig geschaltet werden können. Schutzschaltgeräte mit einer elektronischen Unterbrechungseinheit weisen ferner häufig ein mechanisches Trennkontaktsystem auf, insbesondere mit Trennereigenschaften gemäß einschlägigem Normen für Niederspannungsstromkreise, wobei die Kontakte des mechanischen Trennkontaktsystems in Serie zur elektronischen Unterbrechungseinheit geschaltet sind, d.h. der Strom des zu schützenden Niederspannungsstromkreises wird sowohl über das mechanische Trennkontaktsystem als auch über die elektronische Unterbrechungseinheit geführt.

Die europäische Patentanmeldung EP 2 448 075 A1, Vorrichtung zum Schutz eines Gleichstrom-Abzweiges, offenbart eine Gleichstrom-Verteilungstafel umfasst als interne Geräte einen Leistungsschalter, der entlang jeder der von den Hauptleitungen einer Gleichstromversorgung abzweigenden Abzweigleitungen vorgesehen ist, und einen Controller zum Steuern des Schaltens des Leistungsschalters. Der Leistungsschalter umfasst: Stromanschlussklemmen, die mit den Hauptleitungen verbunden sind; Lastanschlussklemmen, die mit Leitungen einer Last verbunden sind; eine Halbleiterschaltvorrichtung, die entlang einer elektrischen Schaltung zwischen den Klemmen und den Klemmen vorgesehen ist; einen Stromerfassungswiderstand zum Erfassen eines elektrischen Stroms durch die elektrische Schaltung; und eine Rechenschaltung zum Ein- oder Ausschalten der Vorrichtung gemäß einem Ein-/Aus-Steuersignal vom Controller und zum zwangsweisen Ausschalten der Vorrichtung, wenn ein aus einer Spannung über dem Widerstand erhaltener Stromwert einen eingestellten Strom überschreitet.

Die amerikanischen Patentanmeldung US 2020/365346 A1 offenbart einen intelligenten Leistungsschalter mit bidirektionalen Halbleiterschaltern. Ein Leistungsschalter umfasst einen bidirektionalen Halbleiterschalter, eine Schaltersteuerschaltung, Strom- und Spannungssensoren und einen Prozessor. Der bidirektionale Halbleiterschalter ist zwischen einem Leitungseingangsanschluss und einem Lastausgangsanschluss des Leistungsschalters angeschlossen und so konfiguriert, dass er in einen eingeschalteten und einen ausgeschalteten Zustand versetzt werden kann. Die Schaltersteuerschaltung steuert den Betrieb des bidirektionalen Schalters. Der Stromsensor ist so konfiguriert, dass er eine Stromstärke erfasst, die in einem elektrischen Pfad zwischen dem Leitungseingangsanschluss und den Lastausgangsanschlüssen fließt, und ein Strommesssignal erzeugt. Der Spannungssensor ist so konfiguriert, dass er eine Spannungsstärke auf dem elektrischen Pfad erfasst und ein Spannungsmesssignal erzeugt. Der Prozessor ist so konfiguriert, dass er die Strom- und Spannungsmesssignale verarbeitet, um Betriebsstatusinformationen des Leistungsschalters, ein Fehlerereignis und Stromverbrauchsinformationen einer an den Lastausgangsanschluss angeschlossenen Last zu bestimmen.

Die internationale Veröffentlichen WO 2006/119906 A1 offenbart ein Schutzschaltersystem. Schutzschaltersystem (1) mit einem Schalter (2), insbesondere in Form eines steuerbaren Leistungshalbleiters, der zum Schalten einer Last (7) innerhalb eines Strompfades (4) zwischen einen Spannungseingang (5) und einen Lastausgang (6) geschaltet ist, und mit einem Schutzschalter (9), der zwischen einer mit dem Schalter (2) eine Reihenschaltung bildenden ersten Steckposition (13) und einer mit dem Schalter (2) eine Parallelschaltung bildenden zweiten Steckposition (15) umsteckbar ist.

Die japanische Offenlegungsschrift JP 2021 034124 A betrifft eine Schaltanlage für Gleichstromsysteme. Insbesondere weist der Metallkontakt durch die Bildung einer Hybridkonfiguration, bei der ein Metallkontakt und ein Halbleiterschalter in Reihe geschaltet sind, hochohmige Isolationseigenschaften, hohe Spannungsfestigkeit und Stoßspannungsfestigkeit auf. Die Anmeldung betrifft eine Gleichstromschaltanlage, die Merkmale der Hochgeschwindigkeits-Gleichstromabschaltungsfähigkeit durch Gate-Steuerung eines Halbleiterschalters aufweist.

Aufgabe der vorliegenden Erfindung ist es, ein Schutzschaltgerät eingangs genannter Art zu verbessern, insbesondere eine neue, verbesserte Architektur für ein derartiges Schutzschaltgerät anzugeben bzw. ein Konzept mit erhöhter Sicherheit für ein Schutzschaltgerät bzw. den zu schützenden Niederspannungsstromkreis anzugeben.

Diese Aufgabe wird durch ein Schutzschaltgeräte mit den Merkmalen des Patentanspruchs 1 gelöst.

Erfindungsgemäß wird ein Schutzschaltgerät zum Schutz eines elektrischen Niederspannungsstromkreises, insbesondere Niederspannungswechselstromkreises, vorgeschlagen, aufweisend:
- ein Gehäuse mit netzseitigen und lastseitigen Anschlüssen für Leiter des Niederspannungswechselstromkreises, insbesondere einem netzseitigen Phasenleiteranschluss, einem netzseitigen Neutralleiteranschluss, einem lastseitigen Phasenleiteranschluss, einem lastseitigen Neutralleiteranschluss,
- eine mit den netzseitigen Anschlüssen verbundene mechanische Trennkontakteinheit (MK), die andererseits mit einer elektronischen Unterbrechungseinheit (EU) verbunden ist, die andererseits mit den lastseitigen Anschlüssen (L2, N2) verbunden ist,
   so dass durch geschlossene Kontakte der Trennkontakteinheit und einem niederohmigen Zustand von halbleiterbasierten Schaltelementen der elektronischen Unterbrechungseinheit ein Stromfluss im Niederspannungsstromkreis ermöglicht oder durch geöffnete Kontakte der Trennkontakteinheit eine galvanische Trennung unter Vermeidung eines Stromflusses im Niederspannungsstromkreis oder/und durch einen hochohmigen Zustand der Schaltelemente eine Vermeidung eines Stromflusses im Niederspannungsstromkreis ermöglicht wird,
   **d.h.** eine Serienschaltung einer mechanischen Trennkontakteinheit und einer elektronischen Unterbrechungseinheit, wobei die mechanische Trennkontakteinheit netzseitig und die elektronische Unterbrechungseinheit lastseitig angeordnet ist,
- dass die mechanische Trennkontakteinheit eine Handhabe zum manuellen Schließen und Öffnen der Kontakte aufweist,
- einer Stromsensoreinheit, die in einem Leiter zwischen Trennkontakteinheit und Unterbrechungseinheit angeordnet ist, zur Ermittlung der Höhe des Stromes des Niederspannungsstromkreises,
- einer Steuerungseinheit, die mit der Stromsensoreinheit, der elektronischen Unterbrechungseinheit und der mechanischen Trennkontakteinheit verbunden ist, wobei das Schutzschaltgerät derart ausgestaltet ist,
   dass bei Überschreitung von Strom- oder/und Strom-Zeitgrenzwerten eine Vermeidung eines Stromflusses des Niederspannungsstromkreises initiiert wird,
- einer Netzteileinheit zur Energieversorgung des Schutzschaltgerätes, das an Leitern des Niederspannungsstromkreises zwischen Trennkontakteinheit und Unterbrechungseinheit angeschlossen ist.

Erfindungsgemäß wird ein Schutzschaltgerät vorgeschlagen, wobei die elektronische Unterbrechungseinheit den lastseitigen Anschlüssen (Verbraucher, Energiesenke) zugeordnet ist und die mechanische Trennkontakteinheit den netzseitigen Anschlüssen (Energiequelle) zugeordnet ist. Die Netzteileinheit ist an den Leitern des Niederspannungsstromkreises zwischen mechanischer Trennkontakteinheit und elektronischer Unterbrechungseinheit angeschlossen. **D.h.** eine Energieversorgung des Schutzschaltgerätes, insbesondere der Steuerungseinheit, erfolgt nur, wenn die Kontakte der mechanischen Trennkontakteinheit geschlossen sind.

Das Schutzschaltgerät ist derart ausgestaltet, dass bei einem Einschaltvorgang die Kontakte der mechanischen Trennkontakteinheit mittels der Handhabe geschlossen werden, wobei die Schaltelemente der elektronischen Unterbrechungseinheit im hochohmigen Zustand sind. Mit dem Schließen der Kontakte wird die Netzteileinheit mit Energie versorgt, wodurch die Steuerungseinheit mit Energie versorgt wird. Die Steuerungseinheit führt eine Überprüfungsfunktion des Schutzschaltgerätes durch. Bei positivem Ergebnis der Überprüfungsfunktion werden die Schaltelemente der elektronischen Unterbrechungseinheit in einen niederohmigen Zustand versetzt, so dass die lastseitigen Anschlüsse mit Energie versorgt werden. Damit ist der Einschaltvorgang abgeschlossen.

Dies hat den besonderen Vorteil, dass nur ein Schutzschaltgerät mit positiven abgeschlossenen Überprüfungsfunktionen bzw. ohne Fehler eingeschaltet wird bzw. die lastseitigen Leitungen mit Energie versorgt, so dass eine Last bzw. Verbraucher bzw. der lastseitige Stromkreis sicher geschützt wird.

Vorteilhafte Ausgestaltungen der Erfindung sind in den Unteransprüchen und im Ausführungsbeispiel angegeben.

In einer vorteilhaften Ausgestaltung der Erfindung ist eine mit der Steuerungseinheit verbundene Spannungssensoreinheit vorgesehen. Die Spannungssensoreinheit ist zur Ermittlung der Höhe der Spannung zwischen den Leitern des Niederspannungsstromkreises vorgesehen, wobei die Spannungssensoreinheit mit den Leitern zwischen Trennkontakteinheit und Unterbrechungseinheit verbunden ist.

Dies hat den besonderen Vorteil, dass die Spannung des Niederspannungsstromkreises überwacht werden kann und gegebenenfalls bei Über- oder Unterspannungen der Stromkreis getrennt werden kann. Somit unterstützt die erfindungsgemäße Architektur eine erhöhte Betriebssicherheit des Schutzschaltgerätes bzw. im Stromkreis.

In einer vorteilhaften Ausgestaltung der Erfindung weist die mechanische Trennkontakteinheit eine Positionsanzeigeeinheit auf. Die Positionsanzeigeeinheit zeigt die Position der Kontakte an, **d.h.** die Kontaktstellung (offen, geschlossen) wird signalisiert. Die Positionsanzeigeeinheit ist **z.B.** eine mechanische Positionsanzeigeeinheit.

Dies hat den besonderen Vorteil, dass eine Information über die Kontaktstellung (offen, geschlossen) vorliegt. Ferner, bei einer mechanische Positionsanzeigeeinheit, diese Information auch im spannungslosen Zustand anzeigbar ist / angezeigt wird.

In einer vorteilhaften Ausgestaltung der Erfindung weist das Schutzschaltgerät eine mit der Steuerungseinheit verbundene Anzeigeeinheit auf.

Dies hat den besonderen Vorteil, dass (Status-)Informationen des Schutzschaltgerätes anzeigbar sind, **z.B.** über Schalt- oder/und Fehlerzustände.

In einer vorteilhaften Ausgestaltung der Erfindung weist das Schutzschaltgerät eine mit der Steuerungseinheit verbundene Kommunikationseinheit auf, die insbesondere eine drahtlosen Kommunikationsmöglichkeit ermöglicht.

Dies hat den besonderen Vorteil, dass (Status-)Informationen, wie Schalt- und Fehlerzustände zu einem anderen Schutzschaltgerät oder Überwachungs- bzw. Managementsystem übermittelbar sind.

In einer vorteilhaften Ausgestaltung der Erfindung dass eine mit der Steuerungseinheit verbundene Differenzstromermittlungseinheit vorgesehen ist, zur Ermittlung eines Differenzstromes der Leiter des Niederspannungsstromkreis. Dies hat den besonderen Vorteil, dass das Schutzschaltgerät auch eine Fehlerstromüberwachung (Differenzstromüberwachung) aufweist und somit eine weitere Funktionalität hat.

In einer vorteilhaften Ausgestaltung der Erfindung ist das Schutzschaltgerät derart ausgestaltet, dass bei einer Betätigung der mechanischen Trennkontakteinheit durch die Handhabe vor dem Öffnen der Kontakte ein Signal an die Steuerungseinheit gesendet wird, so dass diese die halbleiterbasierten Schaltelemente der elektronischen Unterbrechungseinheit in einen hochohmigen Zustand versetzt.

Dies hat den besonderen Vorteil, dass ein stromloses (leistungsloses) Schalten der mechanischen Trennkontakteinheit unterstützt wird, insbesondere das Lichtbögen oder Kontaktabbrand vermieden wird.

In einer vorteilhaften Ausgestaltung der Erfindung ist die mechanische Trennkontakteinheit derart ausgestaltet, dass nach einem einmaligen Anliegen eines Blockierungssignals, insbesondere von der Steuerungseinheit, ein Schließen der Kontakte durch die Handhabe verhindert wird. D.h. die mechanische Trennkontakteinheit weist eine Blockierungsfunktion bzw. einen Blockierungszustand auf, der insbesondere einmalig ausgelöst werden kann.

Dies hat den besonderen Vorteil, dass nach einem (insbesondere permanenten) Fehler, insbesondere in der Steuerungseinheit, des Schutzschaltgerätes, der speziell die Funktionsfähigkeit des Schutzschaltgerätes gefährdet, eine Energieversorgung des Schutzschaltgerätes als auch des zu schützenden Niederspannungsstromkreises unterbunden wird. Somit wird die Sicherheit des Niederspannungsstromkreises erhöht, da ein ungeschützter Verbraucher nicht mit Energie versorgt wird.

In einer vorteilhaften Ausgestaltung der Erfindung ist die mechanische Trennkontakteinheit derart ausgestaltet, dass die Kontakte von der Steuerungseinheit geöffnet, aber nicht geschlossen werden können. Speziell können die Kontakte geöffnet werden, auch wenn die Handhabe blockiert ist.

Dies hat den besonderen Vorteil, dass eine erhöhte Betriebssicherheit erreicht wird, da der Kontakt / die Kontakte versehentlich durch die Steuerungseinheit nicht geschlossen werden können. Dadurch dass die Kontakte geöffnet werden, auch wenn die Handhabe blockiert ist, wird eine so genannte freie Auslösung / Freiauslösung erreicht, d.h. auch bei blockierter Handhabe wird der Niederspannungsstromkreis sicher geschützt.

In einer vorteilhaften Ausgestaltung der Erfindung ist der Netzteileinheit ein Schutzelement, insbesondere eine Sicherung, oder/und ein Schalter vorgeschaltet.

Dies hat den besonderen Vorteil, dass das Netzteil bzw. die Steuerungseinheit abgeschaltet werden kann, z.B. für Isolationsmessungen. Ferner kann das Netzteil bzw. die Steuerungseinheit abgesichert werden, um eine erhöhte Sicherheit des Schutzschaltgerätes gegen weitere Fehler zu erreichen.

In einer vorteilhaften Ausgestaltung der Erfindung weist die Überprüfungsfunktion einen Selbsttest der Funktionsfähigkeit des Schutzschaltgerätes auf. Beim Selbsttest der Funktionsfähigkeit des Schutzschaltgerätes wird:
mindestens eine Komponente, insbesondere mehrere Komponenten, einer Einheit, insbesondere mehrerer Einheiten,
des Schutzschaltgerätes überprüft.

Bei Funktionsfähigkeit der mindestens einen Komponente, insbesondere mehrerer Komponenten,
einer Einheit, insbesondere mehrerer Einheiten,
wird der niederohmige Zustand zugelassen.

Dies hat den besonderen Vorteil, dass nur ein Schutzschaltgerät mit funktionierenden Einheiten eingeschaltet wird bzw. den Stromkreis überwacht, so dass die Sicherheit im Niederspannungsstromkreis gewährleistet wird.

In einer vorteilhaften Ausgestaltung der Erfindung werden bei fehlender Funktionsfähigkeit die Kontakte der mechanischen Trennkontakteinheit geöffnet. Insbesondere wird vorab oder parallel durch ein Blockierungssignal ein erneutes Schließen der Kontakte verhindert wird.

Dies hat den besonderen Vorteil, dass ein defektes Schutzschaltgerät, das seine Überwachungsfunktionen nicht mehr wahrnehmen kann, eine (versehentliche) Energieversorgung einer Last bzw. der lastseitigen Leitungen verhindert, so dass ungeschützte Stromkreise vermieden werden, wodurch die Sicherheit erhöht wird.

In einer vorteilhaften Ausgestaltung der Erfindung umfasst die Überprüfungsfunktion eine Überprüfung mindestens eines elektrischen Parameters des lastseitigen oder netzseitigen Anschlusses. Insbesondere führt die Überprüfungsfunktion eine Überprüfung mindestens eines, insbesondere mehrerer oder aller, der nachfolgenden Parameter durch:
- Überprüfung auf Überschreitung eines, insbesondere netzseitigen, ersten Überspannungswertes oder/und zweiten Überspannungswertes oder/und dritten Überspannungswertes,
- Überprüfung auf Unterschreitung eines, insbesondere netzseitigen, ersten Unterspannungswertes,
- Überprüfung auf Überschreitung eines ersten Temperaturgrenzwertes oder/und zweiten Temperaturgrenzwertes oder/und dritten Temperaturgrenzwertes,
- Überprüfung auf Parameter des lastseitigen Anschlusses, insbesondere auf Unterschreitung eines lastseitigen ersten oder/und zweiten Widerstandeswertes oder lastseitigen ersten oder/und zweiten Impedanzwertes.

Mit Überspannung bzw. Überspannungswert ist hierbei ein Überschreiten der gültigen Betriebsspannung gemeint. Nicht gemeint sind die Höhen von Überspannungsdips, beispielsweise bei so genannten Bursts bzw. Surges, die typischerweise bei 4 kV oder 8 kV liegen können (bei einem 230 Volt bzw. 400 Volt Netz), so genannte Netz-Überspannungen (d.h. beispielsweise das zehnfache der normativen Spannung des Niederspannungsstromkreises).

Insbesondere kann der erste Überspannungswert einen bestimmten Prozentsatz höher sein als der normative Spannungswert. Beispielsweise bei einem normativen Spannungswert von 230 Volt beispielsweise 10 % höher, 230V + 10%.

Insbesondere kann der zweite Überspannungswert einen bestimmten höheren Prozentsatz höher sein als der normative Spannungswert. Beispielsweise bei einem normativen Spannungswert von 230 Volt beispielsweise 20 % höher, 230V + 20%. Insbesondere kann der dritte Überspannungswert einen bestimmten noch höheren Prozentsatz höher sein als der normative Spannungswert. Beispielsweise bei einem normativen Spannungswert von 230 Volt beispielsweise 30 % höher, 230V + 30%.

Dies hat den besonderen Vorteil, dass z.B. ein Schutzschaltgerät an ein Netz mit abweichender normativer Spannung (Betriebsspannung) oder auf eine Last mit fehlerhaften Parametern nicht eingeschaltet wird. So kann z.B. ein fehlender Schutz bei fehlerhaftem Anschluss von z.B. eines 230 Volt Schutzschaltgerätes an z.B. den beiden Phasen mit einer Spannung von 400 Volt erkannt werden und vermieden werden sowie eine Fehlversorgung einer Last mit zu hoher Spannung vermieden werden. Ebenso kann eine damit in Zusammenhang stehende potenzielle Zerstörung des Schutzschaltgerätes vermieden werden. In analoger Weise kann ein Einschalten auf einen Kurzschluss vor Zuschalten der vollen Versorgungsspannung erkannt und vermieden werden. In analoger Weise können bei zu geringen Spannungen (ein 230 Volt Gerät im 115 Volt Netz) Probleme und fehlender Schutz vermieden werden. So wird eine erhöhte Betriebssicherheit im Niederspannungsstromkreis erreicht. Ferner hat dies den besonderen Vorteil, dass nicht nur das Schutzschaltgerät selbst überprüft wird, sondern auch der mit dem Schutzschaltgerät verbundene Stromkreis / Leitungen, d.h. speziell die Energiequelle bzw. die Energiesenke / Verbraucher. Dies stellt eine neue Funktionalität für ein Schutzschaltgerät dar. So können Fehler auf der Netzseite durch z.B. anklemmen des Schutzschaltgerätes an die falschen Leiter (400 Volt statt 230 Volt) o.ä. erkannt und vermieden werden. Ebenso können mögliche Fehler auf der Lastseite, z.B. glatte Kurzschlüsse, rechtzeitig erkannt und ein Einschalten auf den Kurzschluss vermieden werden.

In einer vorteilhaften Ausgestaltung der Erfindung wird abhängig von den überprüften Parametern:
bei Überschreitung des ersten Überspannungswertes eine Überspannungsinformation abgegeben wird,
bei Überschreitung des zweiten Überspannungswertes ein niederohmig werden der elektronischen Unterbrechungseinheit verhindert wird,
bei Überschreitung des dritten Überspannungswertes ein Öffnen der Kontakte erfolgt,
bei Unterschreitung des ersten Unterspannungswertes eine Unterspannungsinformation abgegeben wird oder/und die elektronische Unterbrechungseinheit hochohmig bleibt, insbesondere sofern die Spannungshöhe größer als ein zweiter Unterspannungswert ist,
bei Überschreitung des ersten Temperaturgrenzwertes eine Temperaturinformation abgegeben wird,
bei Überschreitung des zweiten Temperaturgrenzwertes die elektronische Unterbrechungseinheit hochohmig bleibt,
bei Überschreitung des dritten Temperaturgrenzwertes ein Öffnen der Kontakte erfolgt,
bei Unterschreitung des lastseitigen ersten Widerstandeswertes oder lastseitigen ersten Impedanzwertes eine Impedanzinformation abgegeben wird,
bei Unterschreitung des lastseitigen zweiten Widerstandeswertes oder lastseitigen zweiten Impedanzwertes die elektronische Unterbrechungseinheit hochohmig bleibt.

Dies hat den besonderen Vorteil, dass abgestuft definierte Maßnahmen - Warnung - hochohmig bleiben - galvanische Trennung - durchgeführt werden, abhängig vom Über- bzw. Unterschreiten bestimmter definierter Paramater. So wird ein abgestuftes Schutzkonzept und eine erhöhte Betriebssicherheit im Niederspannungsstromkreis erreicht.

In einer vorteilhaften Ausgestaltung der Erfindung ist das Schutzschaltgerät derart ausgestaltet, dass bei einer Betätigung der Handhabe für ein Öffnen der Kontakte vor dem Öffnen der Kontakte ein Signal an die Steuerungseinheit gesendet wird, so dass die Schaltelemente der elektronischen Unterbrechungseinheit in einen hochohmigen Zustand versetzt werden. Ferner dass die Steuerungseinheit mindestens einen Stromwert bzw. Strom-Zeitwert des Stromflusses im Niederspannungsstromkreis in einem netzspannungsunabhängigen Speicher speichert. Dies hat den besonderen Vorteil, dass ein stromloses (leistungsloses) Schalten der mechanischen Trennkontakteinheit unterstützt wird, insbesondere das Lichtbögen oder Kontaktabbrand vermieden wird. Ferner dass die Höhe des Stromes vor der z.B. initiierten Öffnung erfasst wird und im Nachgang ausgelesen werden kann. So wird die Ermittlung der Fehlerursache unterstützt.

In einer vorteilhaften Ausgestaltung der Erfindung ist das Schutzschaltgerät derart ausgestaltet, dass bei einer Überschreitung eines Strom- oder/und Strom-Zeitgrenzwertes die Schaltelemente der elektronischen Unterbrechungseinheit in einen hochohmigen Zustand zur Vermeidung eines Stromflusses im Niederspannungsstromkreis versetzt werden. Je nach einstellbarer Konfiguration des Schutzschaltgerätes wird ferner:
- die Kontakte der mechanischen Trennkontakteinheit werden geöffnet oder
- die Schaltelemente bleiben in einem hochohmigen Zustand und eine Anzeige dieses Zustandes erfolgt. Insbesondere kann ein niederohmig werden der Schaltelemente durch eine Eingabe initiiert werden. Oder
- dass ein niederohmig werden der Schaltelemente nach einer ersten Zeitspanne oder nach einer Prüfung des lastseitigen Anschlusses, insbesondere eine Prüfung mindestens eines elektrischen Parameters des lastseitigen Anschlusses, spezieller das ein Schwellwert des elektrischen Parameters unterschritten oder überschritten wird, erfolgt.

Dies hat den besonderen Vorteil, dass ein Verhalten des Schutzschaltgerätes konfigurierbar ist. Insbesondere können zur Vermeidung eines Stromflusses je nach Anwendungsfall verschiedene Maßnahmen konfiguriert werden. Zudem kann ein wiedereinschalten des Stromkreises konfiguriert werden. Somit wird der Einsatzbereich und die Funktionalität durch ein Schutzschaltgerät erhöht.

In einer vorteilhaften Ausgestaltung der Erfindung ist das Schutzschaltgerät derart ausgestaltet, dass bei einer Erkennung eines Fehlers einer Einheit des Schutzschaltgerätes die Schaltelemente der elektronischen Unterbrechungseinheit in einen hochohmigen Zustand zur Vermeidung eines Stromflusses im Niederspannungsstromkreis versetzt werden,
dass ferner die Kontakte der mechanischen Trennkontakteinheit geöffnet werden und die mechanische Trennkontakteinheit (vorab) durch ein Blockierungssignal (von der Steuerungseinheit) in einen geblockten Zustand versetzt wird, so dass ein erneutes Schließen der Kontakte verhindert wird.

Dies hat den besonderen Vorteil, dass ein Schutzschaltgerät Fehler selbst erkennt und bei einem erkannten, insbesondere als permanent erkannten Fehler, selbstständig einen sicheren Zustand im Niederspannungsstromkreis herstellt.

In einer vorteilhaften Ausgestaltung der Erfindung ist das Schutzschaltgerät derart ausgestaltet, dass bei einem Energieausfall des elektrischen Niederspannungsstromkreis die mechanische Trennkontakteinheit in ihrem Schaltzustand verbleibt, so dass bei geschlossenen Kontakten und anschließendem Energieausfall nach Wiederherstellung der Energieversorgung die Kontakte weiterhin geschlossen sind.

Dies hat den besonderen Vorteil, dass nach einem Energieausfall das Schutzschaltgerät nicht erneut (manuell) eingeschaltet werden braucht, so dass eine erneute Energieversorgung sichergestellt ist.

In einer vorteilhaften Ausgestaltung der Erfindung weist die Steuerungseinheit einen Mikrocontroller auf.

Dies hat den besonderen Vorteil, dass die erfindungsgemäßen Funktionen zur Erhöhung der Sicherheit eines Schutzschaltgerätes bzw. des zu schützenden elektrischen Niederspannungsstromkreis durch ein (anpassbares) Computerprogrammprodukt realisiert werden können. Ferner können Änderungen und Verbesserungen der Funktion dadurch individuell auf ein Schutzschaltgerät geladen werden, beispielsweise auch über die Kommunikationseinheit.

Erfindungsgemäß wird ein korrespondierendes Verfahren für ein Schutzschaltgerät für einen Niederspannungsstromkreis mit elektronischen (halbleiterbasierten) Schaltelementen mit den gleichen und weiteren Vorteilen beansprucht.

Es wird ein Verfahren zum Betrieb eines Schutzschaltgerätes nach einem der gegenständlichen Patentansprüche beansprucht.

Das Verfahren ist beispielsweise gerichtet auf den Betrieb eines Schutzschaltgerätes mit einer Serienschaltung einer mechanischen Trennkontakteinheit und einer elektronischen Unterbrechungseinheit, wobei die mechanische Trennkontakteinheit netzseitig und die elektronische Unterbrechungseinheit lastseitig (im Schutzschaltgerät) angeordnet ist. Die mechanische Trennkontakteinheit weist eine Handhabe zum Schließen und Öffnen von Kontakten auf. Durch geschlossene Kontakte der Trennkontakteinheit und einem niederohmigen Zustand von halbleiterbasierten Schaltelementen der elektronischen Unterbrechungseinheit kann ein Stromfluss im Niederspannungsstromkreis ermöglicht werden ODER
durch geöffnete Kontakte der Trennkontakteinheit wird eine galvanische Trennung unter Vermeidung eines Stromflusses im Niederspannungsstromkreis ermöglicht oder/und durch einen hochohmigen Zustand der Schaltelemente wird eine Vermeidung eines Stromflusses im Niederspannungsstromkreis ermöglicht. Die Höhe des Stromes des Niederspannungsstromkreises wird (im Schutzschaltgerät) ermittelt und bei Überschreitung von Strom- oder/und Strom-Zeitgrenzwerten wird eine Vermeidung eines Stromflusses des Niederspannungsstromkreises initiiert (mittels der mechanischen Trennkontakteinheit oder/und der elektronischen Unterbrechungseinheit).

Eine Netzteileinheit zur Energieversorgung des Schutzschaltgerätes wird vorgesehen, die an Leitern des Niederspannungsstromkreises zwischen Trennkontakteinheit und Unterbrechungseinheit (im Schutzschaltgerät) angeschlossen wird/ist.

Bei einem Einschaltvorgang werden die Kontakte der mechanischen Trennkontakteinheit mittels der Handhabe geschlossen, wobei Schaltelemente der elektronischen Unterbrechungseinheit im hochohmigen Zustand sind. Mit dem Schließen der Kontakte wird die Netzteileinheit mit Energie versorgt (hierdurch kann eine Steuerungseinheit mit Energie versorgt werden). Mit der Energieversorgung wird eine Überprüfungsfunktion des Schutzschaltgerätes durchgeführt (beispielsweise durch die Steuerungseinheit). Bei positivem Ergebnis der Überprüfungsfunktion wird die elektronischen Unterbrechungseinheit in einen niederohmigen Zustand versetzt, so dass lastseitige Anschlüsse des Schutzschaltgerätes mit Energie versorgt werden. (Vorausgesetzt, elektrische Energie steht an den netzseitigen Anschlüssen zur Verfügung.)

Weitere Verfahren(-sausgestaltungen) können aus den gegenständlichen Ausgestaltungen, Patentansprüchen und dem Ausführungsbeispiel abgeleitet werden.

Alle Ausgestaltungen, sowohl in abhängiger Form rückbezogen auf den Patentanspruch 1 und 21, als auch rückbezogen lediglich auf einzelne Merkmale oder Merkmalskombinationen von Patentansprüchen, bewirken eine Verbesserung eines Schutzschaltgerätes, insbesondere eine neue Architektur und Verbesserung der Sicherheit eines Schutzschaltgerätes bzw. des elektrischen Stromkreises, und stellen ein neues Konzept für ein Schutzschaltgerät bereit.

Die beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit der Zeichnung näher erläutert werden.

Dabei zeigt die Zeichnung:

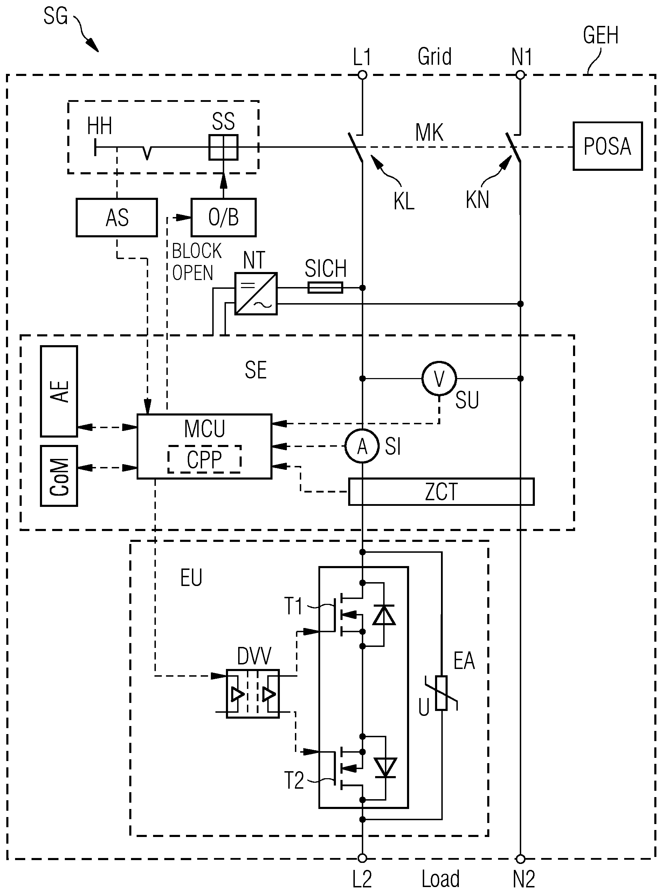

- Figur 1: ein Blockschaltbild eines Schutzschaltgerätes.

Figur 1 zeigt eine Darstellung eines Schutzschaltgerätes SG zum Schutz eines elektrischen Niederspannungsstromkreises, insbesondere Niederspannungswechselstromkreis aufweisend:
- ein Gehäuse GEH mit netzseitigen L1, N1 und lastseitigen L2, N2 Anschlüssen für Leiter des Niederspannungswechselstromkreises,
   die netzseitigen Anschlüsse umfassen einen netzseitigen Neutralleiteranschluss N1 und einen netzseitigen Phasenleiteranschluss L1,
   die die lastseitigen Anschlüsse umfassen einen lastseitigen Neutralleiteranschluss N2 und einen lastseitigen Phasenleiteranschluss L2,
   an den netzseitigen Anschlüssen bzw. der Netzseite Grid ist beispielsweise eine Energiequelle angeschlossen,
   an den lastseitigen Anschlüssen bzw. der Lastseite Load ist beispielsweise (mindestens) ein Verbraucher bzw. Last angeschlossen,
- eine mit den netzseitigen L1, N1 Anschlüssen verbundene mechanische Trennkontakteinheit MK, die andererseits mit einer elektronischen Unterbrechungseinheit EU verbunden ist, die andererseits mit den lastseitigen Anschlüssen L2, N2 verbunden ist,
   d.h. eine Serienschaltung einer mechanischen Trennkontakteinheit MK und einer elektronischen Unterbrechungseinheit EU,
   wobei die mechanischen Trennkontakteinheit MK den netzseitigen Anschlüssen L1, N1 bzw. der Netzseite Grid zugeordnet ist und
   die elektronische Unterbrechungseinheit EU den lastseitigen Anschlüssen L2, N2 bzw. der Lastseite Load zugeordnet ist,
- so dass durch geschlossene Kontakte KL, KN der Trennkontakteinheit MK und einem niederohmigen Zustand von halbleiterbasierten Schaltelementen T1, T2 der elektronischen Unterbrechungseinheit EU ein Stromfluss im Niederspannungsstromkreis ermöglicht oder
   durch geöffnete Kontakte KL, KN der Trennkontakteinheit MK eine galvanische Trennung unter Vermeidung eines Stromflusses im Niederspannungsstromkreis oder/und durch einen hochohmigen Zustand der Schaltelemente T1, T2 der elektronischen Unterbrechungseinheit EU eine Vermeidung eines Stromflusses im Niederspannungsstromkreis ermöglicht wird,
- die mechanische Trennkontakteinheit MK weist eine Handhabe zum Schließen und Öffnen der Kontakte KL, KN auf, die an der Außenseite des Gehäuses zugänglich ist, so dass sie von einem Bediener manuell betätigt werden kann,
- einer Stromsensoreinheit SI, die in einem Leiter zwischen Trennkontakteinheit MK und Unterbrechungseinheit EU angeordnet ist, zur Ermittlung der Höhe des Stromes des Niederspannungsstromkreises,
   im Beispiel ist die Stromsensoreinheit SI im Phasenleiter angeordnet,
- einer Steuerungseinheit SE, die mit der Stromsensoreinheit SI, der elektronischen Unterbrechungseinheit EU und der mechanischen Trennkontakteinheit MK verbunden ist, wobei das Schutzschaltgerät SG derart ausgestaltet ist,
   dass bei Überschreitung von Strom- oder/und Strom-Zeitgrenzwerten eine Vermeidung eines Stromflusses des Niederspannungsstromkreises initiiert wird,
   dies kann durch hochohmig werden der Schaltelemente T1, T2 der elektronischen Unterbrechungseinheit EU oder/und durch Öffnen der Kontakte KL, KN der mechanischen Trennkontakteinheit MK erfolgen,
- einer Netzteileinheit NT zur Energieversorgung des Schutzschaltgerätes SG, insbesondere der Steuerungseinheit SE, das an Leitern des Niederspannungsstromkreises zwischen Trennkontakteinheit MK und Unterbrechungseinheit EU angeschlossen ist, so dass bei geschlossenen Kontakten KL, KN der Trennkontakteinheit MK das Netzteil mit Energie versorgt wird (sofern an der Netzseite Grid, d.h. an den netzseitigen Anschlüssen L1, N2, eine Energiequelle angeschlossen ist).

Der Netzteileinheit kann ein Schutzelement, insbesondere eine Sicherung SICH (wie in Figur 1 eingezeichnet), oder/und ein Schalter vorgeschaltet sein.

Das Schutzschaltgerät SG weist im Beispiel ferner eine mit der Steuerungseinheit SE verbundene Spannungssensoreinheit SU auf, zur Ermittlung der Höhe der Spannung zwischen den Leitern des Niederspannungsstromkreises zwischen Trennkontakteinheit MK und Unterbrechungseinheit EU.

Das Schutzschaltgerät SG weist im Beispiel eine mit der Steuerungseinheit verbundene Differenzstromermittlungseinheit ZCT auf, die an den Leitern des Niederspannungsstromkreises zwischen Trennkontakteinheit MK und Unterbrechungseinheit EU angeordnet ist, zur Ermittlung eines Differenzstromes der Leiter des Niederspannungsstromkreis.

Das Schutzschaltgerät SG weist im Beispiel eine mit der Steuerungseinheit SE verbundene Anzeigeeinheit AE auf, zur Anzeige von Statusinformationen des Schutzschaltgerätes, insbesondere der Steuerungseinheit SE.

Das Schutzschaltgerät SG weist im Beispiel eine mit der Steuerungseinheit SE verbundene Kommunikationseinheit COM auf. Diese kann eine drahtgebundene oder drahtlose Kommunikationsmöglichkeit ermöglichen, ebenso beides.

Die Steuerungseinheit SE weist einen Mikrocontroller MCU auf, zur Steuerung des Schutzschaltgerätes. Der Mikrocontroller MCU bzw. die Steuerungseinheit SE kann ein Computerprogrammprodukt CPP aufweisen. Das Computerprogrammprodukt CPP umfasst Befehle, die bei der Ausführung des Programms durch den Mikrocontroller MCU diesen veranlassen, die genannten Funktionen für ein Schutzschaltgerät zu veranlassen.

Ein computerlesbares Speichermedium, auf dem das Computerprogrammprodukt CPP gespeichert ist, kann vorgesehen sein. Ebenso kann ein Datenträgersignal, das das Computerprogrammprodukt CPP überträgt, vorgesehen sein. So kann das Computerprogrammprodukt CPP bzw. ein neues Computerprogrammprodukt CPP durch die Kommunikationseinheit COM auf das Schutzschaltgerät gelangen.

Im Bespiel gemäß Figur 1 umfasst die Steuerungseinheit SE den Mikrocontroller MCU nebst Computerprogrammprodukt CPP, die Anzeigeeinheit AE, die Kommunikationseinheit CPP, die Stromsensoreinheit SI, die Spannungssensoreinheit SU und die Differenzstromermittlungseinheit ZCT. Dies ist nur ein Beispiel, die Einheiten können auch separat sein bzw. anders gruppiert sein.

Die elektronische Unterbrechungseinheit EU weist im Beispiel gemäß Figur 1 zwei halbleiterbasierte Schaltelemente T1, T2 auf, wie Transistoren, Feldeffekttransistoren, IGBT, o.ä.

Die halbleiterbasierte Schaltelemente T1, T2 können durch eine Treibereinheit Drv angesteuert werden. Die Treibereinheit Drv wird im Beispiel wiederum von der Steuerungseinheit SE angesteuert. Die elektronische Unterbrechungseinheit EU kann einen Energieabsorber EA aufweisen, zur Vermeidung von zerstörerischen Spannungsspitzen bzw. der Aufnahme von Schaltenergien.

Die elektronische Unterbrechungseinheit EU ist im Beispiel einpolig (für einen Leiter des Niederspannungsstromkreises) ausgeführt. Im Beispiel ist die elektronische Unterbrechungseinheit EU im Phasenleiter angeordnet.

Die mechanische Trennkontakteinheit MK ist im Beispiel zweipolig ausgeführt (in beiden Leitern, des im Beispiel einphasigen Wechselstromkreises). Mit einer zweipoligen Ausführung ist eine sichere galvanische Trennung möglich, sofern die mechanische Trennkontakteinheit MK gemäß Norm mit Trennereigenschaften ausgeführt ist (Abstände, Mindestluftstrecken, etc.).

Die mechanische Trennkontakteinheit MK weist eine Positionsanzeigeeinheit POSA auf, die die (Schalt-)Position der Kontakte der mechanische Trennkontakteinheit MK anzeigt. Die Positionsanzeigeeinheit ist mechanisch ausgestaltet, so dass auch im spannungslosen Zustand (keine Energie von der Netzseite Grid) eine Anzeige der Kontaktposition möglich ist.

Das Schutzschaltgerät bzw. die mechanische Trennkontakteinheit MK ist derart ausgestaltet, dass bei einer Betätigung der mechanischen Trennkontakteinheit MK durch die Handhabe HH vor dem Öffnen der Kontakte KL, KN ein (Betätigungs-)Signal AS an die Steuerungseinheit SE gesendet wird. Das Schutzschaltgerät SG bzw. die Steuerungseinheit SE ist derart ausgestaltet, dass die halbleiterbasierten Schaltelemente T1, T2 der elektronischen Unterbrechungseinheit EU dann in einen hochohmigen Zustand versetzt werden, so dass ein leistungsloses Schalten mit der mechanischen Trennkontakteinheit MK ermöglicht wird.

Das Schutzschaltgerät bzw. die mechanische Trennkontakteinheit MK ist in einer Ausgestaltung derart ausgestaltet, dass nach einem einmaligen Anliegen eines Blockierungssignals BLOCK, insbesondere von der Steuerungseinheit SE, ein (weiteres) Schließen der Kontakte KL, KN durch die Handhabe HH verhindert wird. D.h. ein Schließen der Kontakte KL, KN durch die Handhabe HH ist nach dem (einmaligen) Anliegen des Blockierungssignals BLOCK für die Zukunft nicht mehr möglich. Eine Entfernung der Blockierung kann bzw. darf nur durch Fachpersonal erfolgen.

Das Schutzschaltgerät bzw. die mechanische Trennkontakteinheit MK ist derart ausgestaltet, dass die Kontakte KL, KN von der Steuerungseinheit SE geöffnet, beispielsweise durch ein Öffnungssignal OPEN, aber nicht geschlossen werden können. Speziell können die Kontakte geöffnet werden, auch wenn die Handhabe blockiert ist (beispielsweise entgegen der üblichen Benutzung permanent auf "Ein" / Schließen der Kontakte betätigt wird).

Es können weitere Einheiten vorgesehen sein, wie eine Schaltschlosseinheit SS oder eine kombinierte Öffnungs-Blockierungseinheit O/B.

Das neue erfindungsgemäße Schutzschaltgerät SG ist derart ausgestaltet, dass bei einem Einschaltvorgang die Kontakte der mechanischen Trennkontakteinheit mittels der Handhabe geschlossen werden, wobei die Schaltelemente der elektronischen Unterbrechungseinheit im hochohmigen Zustand sind. D.h. im spannungslosen Zustand ist die elektronische Unterbrechungseinheit hochohmig. Mit dem Schließen der Kontakte wird die Netzteileinheit mit Energie versorgt (sofern die Netzseite Grid durch eine Energiequelle mit Energie versorgt wird). Dadurch wird die Steuerungseinheit mit Energie versorgt. Die Steuerungseinheit SE führt eine Überprüfungsfunktion des Schutzschaltgerätes durch. Bei positivem Ergebnis der Überprüfungsfunktion (d.h. es werden keine Fehler festgestellt) werden die Schaltelemente T1, T2 der elektronischen Unterbrechungseinheit EU in einen niederohmigen Zustand versetzt, so dass die lastseitigen Anschlüsse mit Energie des Niederspannungsstromkreises versorgt werden. Somit ist der Einschaltvorgang abgeschlossen. Das Gerät ist sicher bzw. stellt einen sicheren Zustand im Niederspannungsstromkreis her, da nur funktionsfähige Schutzschaltgeräte (Überprüfungsfunktion) den Stromkreis mit Energie versorgen.

Die Überprüfungsfunktion kann durch die Steuerungseinheit, speziell den Mikrocontroller MCU in zusammenwirken mit dem Computerprogrammprodukt CPP realisiert sein.

Die Überprüfungsfunktion kann einerseits einen Selbsttest der Funktionsfähigkeit des Schutzschaltgerätes aufweisen (intern). Hierbei kann mindestens eine Komponente, insbesondere mehrere Komponenten,
einer Einheit, insbesondere mehrerer Einheiten,
des Schutzschaltgerätes überprüft werden.

Bei Funktionsfähigkeit der mindestens einen Komponente, insbesondere mehrerer Komponenten,
einer Einheit, insbesondere mehrerer Einheiten,
wird der niederohmige Zustand zugelassen.

Bei fehlender Funktionsfähigkeit werden die Kontakte der mechanischen Trennkontakteinheit geöffnet. Fehlt die Funktionsfähigkeit bei einem erneuten (bzw. einer bestimmten Anzahl weiterer, z.B. 0 bis 3) Einschaltvorgang, kann vorab oder parallel zum Öffnungssignal ein Blockierungssignal abgegeben werden, so dass ein erneutes (weiteres) Schließen der Kontakte verhindert wird.

Die Überprüfungsfunktion kann andererseits eine Überprüfung mindestens eines elektrischen Parameters des lastseitigen oder netzseitigen Anschlusses umfassen (extern).

Z.B. dass die Überprüfungsfunktion eine Überprüfung mindestens eines, insbesondere mehrerer oder aller, der nachfolgenden Parameter durchführt:
- Überprüfung auf Überschreitung eines, insbesondere netzseitigen, ersten Überspannungswertes oder/und zweiten Überspannungswertes oder/und dritten Überspannungswertes,
- Überprüfung auf Unterschreitung eines, insbesondere netzseitigen, ersten Unterspannungswertes,
- Überprüfung auf Überschreitung eines ersten Temperaturgrenzwertes oder/und zweiten Temperaturgrenzwertes oder/und dritten Temperaturgrenzwertes,
- Überprüfung auf Parameter des lastseitigen Anschlusses, insbesondere auf Unterschreitung eines lastseitigen ersten oder/und zweiten Widerstandeswertes oder lastseitigen ersten oder/und zweiten Impedanzwertes.

Abhängig von den überprüften Parametern kann:
bei Überschreitung des ersten Überspannungswertes eine Überspannungsinformation abgegeben wird,
bei Überschreitung des zweiten Überspannungswertes ein niederohmig werden der elektronischen Unterbrechungseinheit verhindert wird,
bei Überschreitung des dritten Überspannungswertes ein Öffnen der Kontakte erfolgt,
bei Unterschreitung des ersten Unterspannungswertes eine Unterspannungsinformation abgegeben wird oder/und die elektronische Unterbrechungseinheit hochohmig bleibt, insbesondere sofern die Spannungshöhe größer als ein zweiter Unterspannungswert ist,
bei Überschreitung des ersten Temperaturgrenzwertes eine Temperaturinformation abgegeben wird,
bei Überschreitung des zweiten Temperaturgrenzwertes die elektronische Unterbrechungseinheit hochohmig bleibt,
bei Überschreitung des dritten Temperaturgrenzwertes ein Öffnen der Kontakte erfolgt,
bei Unterschreitung des lastseitigen ersten Widerstandeswertes oder lastseitigen ersten Impedanzwertes eine Impedanzinformation abgegeben wird,
bei Unterschreitung des lastseitigen zweiten Widerstandeswertes oder lastseitigen zweiten Impedanzwertes die elektronische Unterbrechungseinheit hochohmig bleibt.

Das Schutzschaltgerät kann derart ausgestaltet ist, dass bei einer Betätigung der Handhabe HH für ein Öffnen der Kontakte vor dem Öffnen der Kontakte ein Signal an die Steuerungseinheit SE gesendet wird, so dass die Schaltelemente der elektronischen Unterbrechungseinheit EU in einen hochohmigen Zustand versetzt werden oder/und dass die Steuerungseinheit SE mindestens einen Stromwert bzw. Strom-Zeitwert des Stromflusses im Niederspannungsstromkreis in einem netzspannungsunabhängigen Speicher, insbesondere der Steuerungseinheit SE, speichert.

Das Schutzschaltgerät kann derart ausgestaltet sein, dass bei einer Überschreitung eines Strom- oder/und Strom-Zeitgrenzwertes die Schaltelemente der elektronischen Unterbrechungseinheit (EU) in einen hochohmigen Zustand zur Vermeidung eines Stromflusses im Niederspannungsstromkreis versetzt werden,
dass je nach einstellbarer Konfiguration des Schutzschaltgerätes ferner:
- die Kontakte der mechanischen Trennkontakteinheit (MK) geöffnet werden oder
- die Schaltelemente in einem hochohmigen Zustand bleiben und eine Anzeige dieses Zustandes erfolgt, insbesondere dass ein niederohmig werden der Schaltelemente durch eine Eingabe initiiert werden kann, oder
- dass ein niederohmig werden der Schaltelemente nach einer ersten Zeitspanne oder nach einer Prüfung des lastseitigen Anschlusses, insbesondere eine Prüfung mindestens eines elektrischen Parameters des lastseitigen Anschlusses, spezieller das ein Schwellwert des elektrischen Parameters unterschritten oder überschritten wird, erfolgt.

Das Schutzschaltgerät kann derart ausgestaltet sein, dass bei einer Erkennung eines Fehlers einer Einheit des Schutzschaltgerätes (während des laufenden Betriebes), insbesondere durch die Steuerungseinheit SE, die Schaltelemente der elektronischen Unterbrechungseinheit in einen hochohmigen Zustand zur Vermeidung eines Stromflusses im Niederspannungsstromkreis versetzt werden. Ferner können die Kontakte der mechanischen Trennkontakteinheit geöffnet werden. Zudem kann die mechanische Trennkontakteinheit durch ein Blockierungssignal in einen geblockten Zustand versetzt werden, so dass ein erneutes Schließen der Kontakte verhindert wird - zumindest nach einem bzw. mehreren erneuten Einschaltversuchen.

Das Schutzschaltgerät kann derart ausgestaltet sein, dass bei einem Energieausfall des elektrischen Niederspannungsstromkreis die mechanische Trennkontakteinheit in ihrem Schaltzustand verbleibt, so dass bei geschlossenen Kontakten und anschließendem Energieausfall nach Wiederherstellung der Energieversorgung die Kontakte weiterhin geschlossen sind.

Mit hochohmig ist ein Zustand gemeint, bei dem nur noch ein Strom vernachlässigbarer Größe fließt. Insbesondere sind mit hochohmig Widerstandswerte von größer als 1 Kiloohm, besser größer als 10 Kiloohm, 100 Kiloohm, 1 Megaohm, 10 Megaohm, 100 Megaohm, 1 Gigaohm oder größer gemeint.

Mit niederohmig ist ein Zustand gemeint, bei dem der auf dem Schutzschaltgerät angegebene Stromwert fließen könnte. Insbesondere sind mit niederohmig Widerstandswerte gemeint, die kleiner als 10 Ohm, besser kleiner als 1 Ohm, 100 Milliohm, 10 Milliohm, 1 Milliohm oder kleiner sind.

Im Folgenden soll die Erfindung nochmal mit anderen Worten beschrieben bzw. zusammengefasst werden.

In erfindungsgemäßen elektronischen Schutzschaltgeräten werden mechanische Schaltkontakte in Kombination mit einem elektronischen Schalter die Schaltfunktionen übernehmen.
1.) Neues Konzept:
   - Mechanische Trenn-Kontakte in beiden Leitern / Polen
   - Ein Pol (L) ist über Leistungshalbleiter geschützt
   - Entlastungsnetzwerk (Energy-Absorber) über dem Schalter
   - Eine mechanische Betätigung der mechanischen Kontakte, die so aufgebaut ist, dass vor dem Öffnen der Kontakte die Betätigung an die Steuerungseinheit gesendet wird und dieser die elektronische Unterbrechungseinheit / Leistungshalbleiter hochohmig werden lässt / sicher ausschaltet
   - Die mechanischen Trennkontakteinheit kann durch die Steuerungseinheit geöffnet werden, aber nicht geschlossen werden
   - Ein Schließen der mechanischen Trennkontakteinheit ist nur manuell durch die Handhabe möglich
   - Messtechnik:
      ∘ Spannungsmessung zwischen L und N
      ∘ Strommessung im geschützten Pol (L)
      ∘ Summenstrommessung über L und N
   - Die Spannungsversorgung für die Steuerungseinheit greift hinter der mechanischen Trennkontakteinheit die Spannung an L und N ab.
      ∘Die Spannungsversorgung hat einen geschützten Anschluss an L (z.B. Sicherung)
   - Die Steuerungseinheit kann die mechanische Trennkontakteinheit in einen "geblockten" Zustand (z.B. "Dauerrutscher") versetzten. Ein manuelles / mechanisches Einschalten über die Handhabe ist dann nicht mehr möglich. (Schutz vor einem Fehlerfall in der Steuerungseinheit / Schutzschaltgerät)
   - Das Gerät verfügt über eine Kommunikationseinheit (bevorzugt kabellos)
   - Die Kontaktstellung der Kontakte wird mechanisch angezeigt. (Z.B. mit Grün: Aus und Rot: Ein)
   - Das Gerät verfügt über eine Anzeigeeinheit, die den Status des Gerätes anzeigt. Z.B. mittels Lichtemitterdioden / LEDs, wie folgt:
      ∘ Rot: Ein-Zustand
      ∘ Grün: Aus-Zustand, Freigeschaltet
      ∘ Gelb: Control-Zustand, Hochohmig
2.) Verhalten beim Einschalten:
   Beim Einschalten wird das Gerät über die Handhabe eingeschaltet.
   a) Die Handhabe wird auf Ein gestellt
   b) Kontakte schließen
   c) Lastseitiger Anschluss ist noch spannungslos, da Unterbrechungseinheit hochohmig
   d) Netzteileinheit beginnt das Schutzschaltgerät / die Steuerungseinheit mit Energie zu versorgen
   e) Überprüfungsfunktion - intern: Selbsttest (Einheiten)
   f) Überprüfungsfunktion - extern: Netzseite Grid oder(/und) Lastseite Load (z.B. Last wird überprüft (z.B. auf Kurzschluss))
   g) Unterbrechungseinheit wird niederohmig (ohne weitere (manuelle) Betätigung)
   h) Lastseite ist versorgt / erhält Energie von Netzseite
3.) Verhalten beim Ausschalten:
   Beim Ausschalten wird Gerät über die Handhabe (manuelle Betätigung) ausgeschaltet.
   a) Handhabe wird auf Aus gestellt (Kontakte zu öffnen)
   b) Die Betätigung wird an die Steuerungseinheit gesendet, bevor die Kontakte öffnen
   c) Die Unterbrechungseinheit wird sofort (bzw. intelligent im Nulldurchgang) hochohmig
   d) Die Kontakte öffnen
   e) Die Steuerungseinheit speichert (vorab) einen z.B. I²t-Wert für das thermische Gedächtnis
   f) Die Spannungsversorgung für die Steuerungseinheit wird unterbrochen
   g) Das Gerät schaltet aus
4.) Verhalten im Fehlerfall in der Last: Kurzschluss oder Überlast:
   Tritt bei einem Gerät ein z. B. Kurzschluss in der Last auf, reagiert das Gerät wie folgt.
   a) Die Überschreitung eines Stromgrenzwertes wird von den entsprechenden Einheiten erkannt
   b) Die Unterbrechungseinheit wird in den hochohmigen Zustand geschaltet, sodass die Last / der Verbraucher nicht mehr mit Energie / Spannung versorgt wird
   c) Anschließend kann das Gerät je nach Konfiguration entscheiden (aufgrund von Fehlerart, und/oder Fehlerstrom) welcher der z.B. folgenden (beiden) Zustände eingenommen wird:
      I) Das Gerät öffnet selbstständig die mechanischen Kontakte und das Gerät wird komplett ausgeschaltet (d.h. auch freigeschaltet)
      II) Das Gerät bleibt im hochohmigen Zustand. (die Kontatakte der Trennkontakteinheit bleiben geschlossen - d.h. das Gerät schaltet nicht frei). Von diesem Zustand aus ist ein automatisches Einschalten wieder möglich.
5.) Verhalten im (internen) Geräte-Fehlerfall:
   Tritt ein Fehlerfall im Schutzschaltgerät, insbesondere der Steuerungseinheit, auf, geht das Gerät in einen sicheren Zustand, aus dem das Gerät nicht wieder eingeschaltet werden kann. Die Voraussetzung ist die Detektion des Defektes durch das Schutzschaltgerät.
   a) Der Fehler im Schutzschaltgerät wird detektiert.
   b) Das Gerät schaltet die Unterbrechungseinheit hochohmig.
   c) Das Gerät öffnet die Kontakte der Trennkontakteinheit und blockiert dabei die Trennkontakteinheit (z.B. das Schaltschloss) in dem Maße, dass ein Schließen der Kontakte durch die Handhabe nicht mehr möglich ist.
6.) Verhalten bei Netzausfall:
   Tritt ein Netzausfall auf, wird das Schutzschaltgerät nicht mehr mit Energie versorgt. Die Kontakte bleiben geschlossen. Somit kann das Gerät beim wieder Auftreten der Netzspannung in den vorherigen Schaltzustand ohne manuelle Betätigung wechseln.

## Patentansprüche

1. Schutzschaltgerät (SG) zum Schutz eines elektrischen Niederspannungswechselstromkreises aufweisend:
- ein Gehäuse (GEH) mit netzseitigen (L1, N1) und lastseitigen (L2, N2) Anschlüssen für Leiter des Niederspannungswechselstromkreises,
- eine mit den netzseitigen (L1, N1) Anschlüssen verbundene mechanische Trennkontakteinheit (MK), die andererseits mit einer elektronischen Unterbrechungseinheit (EU) verbunden ist, die andererseits mit den lastseitigen Anschlüssen (L2, N2) verbunden ist,
so dass durch geschlossene Kontakte der Trennkontakteinheit und einem niederohmigen Zustand von halbleiterbasierten Schaltelementen der elektronischen Unterbrechungseinheit ein Stromfluss im Niederspannungswechselstromkreis ermöglicht oder
durch geöffnete Kontakte der Trennkontakteinheit eine galvanische Trennung unter Vermeidung eines Stromflusses im Niederspannungswechselstromkreis oder/und durch einen hochohmigen Zustand der Schaltelemente eine Vermeidung eines Stromflusses im Niederspannungswechselstromkreis ermöglicht wird,
- dass die mechanische Trennkontakteinheit eine Handhabe zum Schließen und Öffnen der Kontakte aufweist,
- einer Stromsensoreinheit (SI), die in einem Leiter nach der Trennkontakteinheit angeordnet ist, zur Ermittlung der Höhe des Stromes des Niederspannungswechselstromkreises,
- einer Steuerungseinheit (SE), die mit der Stromsensoreinheit (SI), der elektronischen Unterbrechungseinheit (EU) und der mechanischen Trennkontakteinheit (MK) verbunden ist, wobei das Schutzschaltgerät (SG) derart ausgestaltet ist, dass bei Überschreitung von Strom- oder/und Strom-Zeitgrenzwerten eine Vermeidung eines Stromflusses des Niederspannungswechselstromkreises initiiert wird,
- einer Netzteileinheit (NT) zur Energieversorgung des Schutzschaltgerätes (SG), das an Leitern des Niederspannungswechselstromkreises zwischen Trennkontakteinheit (MK) und Unterbrechungseinheit (EU) angeschlossen ist,
- dass das Schutzschaltgerät (SG) derart ausgestaltet ist, dass bei einem Einschaltvorgang die Kontakte der mechanischen Trennkontakteinheit (MK) mittels der Handhabe geschlossen werden, wobei die Schaltelemente der elektronischen Unterbrechungseinheit (EU) im hochohmigen Zustand sind,
mit dem Schließen der Kontakte die Netzteileinheit mit Energie versorgt wird, wodurch die Steuerungseinheit (SE) mit Energie versorgt wird,
die Steuerungseinheit (SE) eine Überprüfungsfunktion des Schutzschaltgerätes durchführt, bei positivem Ergebnis der Überprüfungsfunktion die Schaltelemente der elektronischen Unterbrechungseinheit (EU) in einen niederohmigen Zustand versetzt werden, so dass die lastseitigen Anschlüsse mit Energie des Niederspannungswechselstromkreises versorgt werden.

2. Schutzschaltgerät (SG) nach Patentanspruch 1,
**dadurch gekennzeichnet,**
**dass** eine mit der Steuerungseinheit (SE) verbundene Spannungssensoreinheit (SU) vorgesehen ist, zur Ermittlung der Höhe der Spannung zwischen den Leitern des Niederspannungswechselstromkreises zwischen Trennkontakteinheit und Unterbrechungseinheit.

3. Schutzschaltgerät (SG) nach Patentanspruch 1 oder 2,
**dadurch gekennzeichnet,**
**dass** die mechanische Trennkontakteinheit eine Positionsanzeigeeinheit der Position der Kontakte aufweist, insbesondere eine mechanische Positionsanzeigeeinheit.

4. Schutzschaltgerät (SG) nach Patentanspruch 1, 2 oder 3,
**dadurch gekennzeichnet,**
**dass** das Schutzschaltgerät eine mit der Steuerungseinheit (SE) verbundene Anzeigeeinheit (AE) aufweist, die insbesondere einen hochohmigen oder niederohmigen Schaltzustand der elektronischen Unterbrechungseinheit anzeigt.

5. Schutzschaltgerät (SG) nach einem der vorhergehenden Patentansprüche,
**dadurch gekennzeichnet,**
**dass** das Schutzschaltgerät eine mit der Steuerungseinheit (SE) verbundene Kommunikationseinheit (COM) aufweist, die insbesondere eine drahtlosen Kommunikationsmöglichkeit ermöglicht.

6. Schutzschaltgerät (SG) nach einem der vorhergehenden Patentansprüche,
**dadurch gekennzeichnet,**
**dass** eine mit der Steuerungseinheit verbundene Differenzstromermittlungseinheit vorgesehen ist, zur Ermittlung eines Differenzstromes der Leiter des Niederspannungswechselstromkreises.

7. Schutzschaltgerät (SG) nach einem der vorhergehenden Patentansprüche,
**dadurch gekennzeichnet,**
**dass** das Schutzschaltgerät derart ausgestaltet ist, dass bei einer Betätigung der mechanischen Trennkontakteinheit durch die Handhabe vor dem Öffnen der Kontakte ein Signal an die Steuerungseinheit (SE) gesendet wird, so dass diese die halbleiterbasierten Schaltelemente der elektronischen Unterbrechungseinheit (EU) in einen hochohmigen Zustand versetzt.

8. Schutzschaltgerät (SG) nach einem der vorhergehenden Patentansprüche,
**dadurch gekennzeichnet,**
**dass** die mechanische Trennkontakteinheit (MK) derart ausgestaltet ist, dass nach einem einmaligen Anliegen eines Blockierungssignals, insbesondere von der Steuerungseinheit (SE), ein Schließen der Kontakte durch die Handhabe verhindert wird.

9. Schutzschaltgerät (SG) nach einem der vorhergehenden Patentansprüche,
**dadurch gekennzeichnet,**
**dass** die mechanische Trennkontakteinheit (MK) derart ausgestaltet ist, dass die Kontakte von der Steuerungseinheit (SE) geöffnet, aber nicht geschlossen werden können, insbesondere, dass die Kontakte geöffnet werden können, auch wenn die Handhabe blockiert ist.

10. Schutzschaltgerät (SG) nach einem der vorhergehenden Patentansprüche,
**dadurch gekennzeichnet,**
**dass** der Netzteileinheit ein Schutzelement, insbesondere eine Sicherung, vorgeschaltet ist.

11. Schutzschaltgerät (SG) nach einem der vorhergehenden Patentansprüche,
**dadurch gekennzeichnet,**
**dass** die Überprüfungsfunktion einen Selbsttest der Funktionsfähigkeit des Schutzschaltgerätes aufweist,
bei dem mindestens eine Komponente, insbesondere mehrere Komponenten,
einer Einheit, insbesondere mehrerer Einheiten,
des Schutzschaltgerätes überprüft wird,
und bei Funktionsfähigkeit der mindestens einen Komponente, insbesondere mehrerer Komponenten,
einer Einheit, insbesondere mehrerer Einheiten,
der niederohmige Zustand zugelassen wird.

12. Schutzschaltgerät (SG) nach Patentanspruch 11,
**dadurch gekennzeichnet,**
**dass** bei fehlender Funktionsfähigkeit die Kontakte der mechanischen Trennkontakteinheit (MK) geöffnet werden, insbesondere, dass vorab oder parallel durch ein Blockierungssignal ein erneutes Schließen der Kontakte verhindert wird.

13. Schutzschaltgerät (SG) nach Patentanspruch 11 oder 12,
**dadurch gekennzeichnet,**
**dass** die Überprüfungsfunktion eine Überprüfung mindestens eines elektrischen Parameters des lastseitigen oder netzseitigen Anschlusses umfasst,
insbesondere dass die Überprüfungsfunktion eine Überprüfung mindestens eines, insbesondere mehrerer oder aller, der nachfolgenden Parameter durchführt:
- Überprüfung auf Überschreitung eines, insbesondere netzseitigen, ersten Überspannungswertes oder/und zweiten Überspannungswertes oder/und dritten Überspannungswertes,
- Überprüfung auf Unterschreitung eines, insbesondere netzseitigen, ersten Unterspannungswertes,
- Überprüfung auf Überschreitung eines ersten Temperaturgrenzwertes oder/und zweiten Temperaturgrenzwertes oder/und dritten Temperaturgrenzwertes,
- Überprüfung auf Parameter des lastseitigen Anschlusses, insbesondere auf Unterschreitung eines lastseitigen ersten oder/und zweiten Widerstandeswertes oder lastseitigen ersten oder/und zweiten Impedanzwertes.

14. Schutzschaltgerät (SG) nach Patentanspruch 13,
**dadurch gekennzeichnet,**
**dass** abhängig von den überprüften Parametern:
bei Überschreitung des ersten Überspannungswertes eine Überspannungsinformation abgegeben wird,
bei Überschreitung des zweiten Überspannungswertes ein niederohmig werden der elektronischen Unterbrechungseinheit verhindert wird,
bei Überschreitung des dritten Überspannungswertes ein Öffnen der Kontakte erfolgt,
bei Unterschreitung des ersten Unterspannungswertes eine Unterspannungsinformation abgegeben wird oder/und die elektronische Unterbrechungseinheit hochohmig bleibt, insbesondere sofern die Spannungshöhe größer als ein zweiter Unterspannungswert ist,
bei Überschreitung des ersten Temperaturgrenzwertes eine Temperaturinformation abgegeben wird,
bei Überschreitung des zweiten Temperaturgrenzwertes die elektronische Unterbrechungseinheit hochohmig bleibt,
bei Überschreitung des dritten Temperaturgrenzwertes ein Öffnen der Kontakte erfolgt,
bei Unterschreitung des lastseitigen ersten Widerstandeswertes oder lastseitigen ersten Impedanzwertes eine Impedanzinformation abgegeben wird,
bei Unterschreitung des lastseitigen zweiten Widerstandeswertes oder lastseitigen zweiten Impedanzwertes die elektronische Unterbrechungseinheit hochohmig bleibt.

15. Schutzschaltgerät (SG) nach einem der vorhergehenden Patentansprüche,
**dadurch gekennzeichnet,**
**dass** das Schutzschaltgerät derart ausgestaltet ist, dass bei einer Betätigung der Handhabe für ein Öffnen der Kontakte vor dem Öffnen der Kontakte ein Signal an die Steuerungseinheit (SE) gesendet wird, so dass die Schaltelemente der elektronischen Unterbrechungseinheit (EU) in einen hochohmigen Zustand versetzt werden,
**dass** die Steuerungseinheit (SE) mindestens einen Stromwert bzw. Strom-Zeitwert des Stromflusses im Niederspannungswechselstromkreis in einem netzspannungsunabhängigen Speicher speichert.

16. Schutzschaltgerät (SG) nach einem der vorhergehenden Patentansprüche,
**dadurch gekennzeichnet,**
**dass** das Schutzschaltgerät derart ausgestaltet ist, dass bei einer Überschreitung eines Strom- oder/und Strom-Zeitgrenzwertes die Schaltelemente der elektronischen Unterbrechungseinheit (EU) in einen hochohmigen Zustand zur Vermeidung eines Stromflusses im Niederspannungswechselstromkreis versetzt werden,
**dass** je nach einstellbarer Konfiguration des Schutzschaltgerätes ferner:
- die Kontakte der mechanischen Trennkontakteinheit (MK) geöffnet werden oder
- die Schaltelemente in einem hochohmigen Zustand bleiben und eine Anzeige dieses Zustandes erfolgt, insbesondere dass ein niederohmig werden der Schaltelemente durch eine Eingabe initiiert werden kann, oder
- **dass** ein niederohmig werden der Schaltelemente nach einer ersten Zeitspanne oder nach einer Prüfung des lastseitigen Anschlusses, insbesondere eine Prüfung mindestens eines elektrischen Parameters des lastseitigen Anschlusses, spezieller das ein Schwellwert des elektrischen Parameters unterschritten oder überschritten wird, erfolgt.

17. Schutzschaltgerät (SG) nach einem der vorhergehenden Patentansprüche,
**dadurch gekennzeichnet,**
**dass** das Schutzschaltgerät derart ausgestaltet ist, dass bei einer Erkennung eines Fehlers einer Einheit des Schutzschaltgerätes die Schaltelemente der elektronischen Unterbrechungseinheit in einen hochohmigen Zustand zur Vermeidung eines Stromflusses im Niederspannungswechselstromkreis versetzt werden,
**dass** ferner die Kontakte der mechanischen Trennkontakteinheit geöffnet werden und die mechanische Trennkontakteinheit durch ein Blockierungssignal in einen geblockten Zustand versetzt wird, so dass ein erneutes Schließen der Kontakte verhindert wird.

18. Schutzschaltgerät (SG) nach einem der vorhergehenden Patentansprüche,
**dadurch gekennzeichnet,**
**dass** das Schutzschaltgerät derart ausgestaltet ist, dass bei einem Energieausfall des elektrischen Niederspannungswechselstromkreises die mechanische Trennkontakteinheit in ihrem Schaltzustand verbleibt, so dass bei geschlossenen Kontakten und anschließendem Energieausfall nach Wiederherstellung der Energieversorgung die Kontakte weiterhin geschlossen sind.

19. Schutzschaltgerät (SG) nach einem der vorhergehenden Patentansprüche,
**dadurch gekennzeichnet,**
**dass** die Steuerungseinheit (SE) einen Mikrocontroller aufweist.

20. Verfahren zum Betrieb eines Schutzschaltgerätes (SG) mit einer Serienschaltung einer mechanischen Trennkontakteinheit (MK) und einer elektronischen Unterbrechungseinheit (EU), wobei die mechanische Trennkontakteinheit (MK) netzseitig und die elektronische Unterbrechungseinheit (EU) lastseitig angeordnet ist,
die mechanische Trennkontakteinheit (MK) eine Handhabe zum Schließen und Öffnen von Kontakten aufweist,
wobei die Höhe des Stromes des Niederspannungswechselstromkreises ermittelt wird und bei Überschreitung von Strom- oder/und Strom-Zeitgrenzwerten eine Vermeidung eines Stromflusses des Niederspannungswechselstromkreises initiiert wird,
eine Netzteileinheit zur Energieversorgung des Schutzschaltgerätes vorgesehen ist, die an Leitern des Niederspannungswechselstromkreises zwischen Trennkontakteinheit (MK) und Unterbrechungseinheit (EU) angeschlossen ist,
dass bei einem Einschaltvorgang die Kontakte der mechanischen Trennkontakteinheit (MK) mittels der Handhabe geschlossen werden, wobei Schaltelemente der elektronischen Unterbrechungseinheit (EU) im hochohmigen Zustand sind,
mit dem Schließen der Kontakte die Netzteileinheit mit Energie versorgt wird, wodurch eine Überprüfungsfunktion des Schutzschaltgerätes durchgeführt wird
und bei positivem Ergebnis der Überprüfungsfunktion die elektronische Unterbrechungseinheit in einen niederohmigen Zustand versetzt wird, so dass lastseitige Anschlüsse des Schutzschaltgerätes mit Energie versorgt werden.

## Claims

1. Circuit breaker (SG) for protecting an electric low-voltage AC circuit comprising:
- a housing (GEH) with grid-side (L1, N1) and load-side (L2, N2) terminals for conductors of the low-voltage AC circuit,
- a mechanical isolating contact unit (MK) which is connected to the grid-side (L1, N1) terminals and is also connected to an electronic interruption unit (EU), which is also connected to the load-side terminals (L2, N2),
so that a current flow in the low-voltage AC circuit is enabled by closed contacts of the isolating contact unit and a low-resistance state of semiconductor-based switching elements of the electronic interruption unit, or
a galvanic isolation preventing a current flow in the low-voltage AC circuit is enabled by open contacts of the isolating contact unit or/and a current flow in the low-voltage AC circuit is able to be prevented by a high-resistance state of the switching elements,
- that the mechanical isolating contact unit has a handle for opening and closing the contacts,
- a current sensor unit (SI) arranged in a conductor downstream of the isolating contact unit, to determine the level of the current in the low-voltage AC circuit,
- a control unit (SE), which is connected to the current sensor unit (SI), the electronic interruption unit (EU) and the mechanical isolating contact unit (MK), wherein the circuit breaker (SG) is designed in such a way that, if current limit values or/and current-time limit values are exceeded, prevention of a current flow in the low-voltage AC circuit is initiated,
- a power supply unit (NT) for supplying power to the circuit breaker (SG), which is connected to conductors of the low-voltage AC circuit between the isolating contact unit (MK) and the interruption unit (EU),
- that the circuit breaker (SG) is designed in such a way that the contacts of the mechanical isolating contact unit (MK) are closed by means of the handle during a power-on operation, wherein the switching elements of the electronic interruption unit (EU) are in the high-resistance state,
on closure of the contacts, power is supplied to the power supply unit, which causes power to be supplied to the control unit (SE), the control unit (SE) performs a checking function of the circuit breaker, and, if the result of the checking function is positive, the switching elements of the electronic interruption unit (EU) are placed in a low-resistance state so that the load-side terminals are supplied with power from the low-voltage AC circuit.

2. Circuit breaker (SG) according to Patent Claim 1,
**characterized**
**in that** a voltage sensor unit (SU) connected to the control unit (SE) is provided to determine the level of the voltage between the conductors of the low-voltage AC circuit between the isolating contact unit and the interruption unit.

3. Circuit breaker (SG) according to Patent Claim 1 or 2,
**characterized**
**in that** the mechanical isolating contact unit has a position indicator unit for the position of the contacts, in particular a mechanical position indicator unit.

4. Circuit breaker (SG) according to Patent Claim 1, 2 or 3,
**characterized**
**in that** the circuit breaker has an indicator unit (AE) which is connected to the control unit (SE) and in particular indicates a high-resistance or low-resistance switching state of the electronic interruption unit.

5. Circuit breaker (SG) according to any of the preceding patent claims,
**characterized**
**in that** the circuit breaker has a communication unit (COM) which is connected to the control unit (SE) and enables in particular a wireless communication capability.

6. Circuit breaker (SG) according to any of the preceding patent claims,
**characterized**
**in that** a difference current determination unit connected to the control unit is provided for determining a difference current in the conductors of the low-voltage AC circuit.

7. Circuit breaker (SG) according to any of the preceding patent claims,
**characterized**
**in that** the circuit breaker is designed in such a way that, when the mechanical isolating contact unit is actuated by the handle, a signal is sent to the control unit (SE) before the contacts are opened, so that said control unit places the semiconductor-based switching elements of the electronic interruption unit (EU) in a high-resistance state.

8. Circuit breaker (SG) according to any of the preceding patent claims,
**characterized**
**in that** the mechanical isolating contact unit (MK) is designed in such a way that after a single application of a blocking signal, in particular by the control unit (SE), closing of the contacts by the handle is prevented.

9. Circuit breaker (SG) according to any of the preceding patent claims,
**characterized**
**in that** the mechanical isolating contact unit (MK) is designed in such a way that the contacts can be opened by the control unit (SE), but not closed, in particular that the contacts can be opened even if the handle is blocked.

10. Circuit breaker (SG) according to any of the preceding patent claims,
**characterized**
**in that** a protective element, in particular a fuse, is connected upstream of the power supply unit.

11. Circuit breaker (SG) according to any of the preceding patent claims,
**characterized**
**in that** the checking function comprises a self-test of the operability of the circuit breaker,
in which at least one component, in particular a plurality of components,
of a unit, in particular of a plurality of units,
of the circuit breaker is checked,
and if the at least one component, in particular the plurality of components,
of a unit, in particular of a plurality of units,
is operational, the low-resistance state is permitted.

12. Circuit breaker (SG) according to Patent Claim 11,
**characterized**
**in that**, in the absence of operability, the contacts of the mechanical isolating contact unit (MK) are opened, in particular in that in advance or in parallel a blocking signal prevents the contacts from being closed again.

13. Circuit breaker (SG) according to Patent Claim 11 or 12,
**characterized**
**in that** the checking function comprises a check of at least one electrical parameter of the load-side or grid-side terminal,
in particular in that the checking function performs a check of at least one, in particular a plurality or all, of the following parameters:
- checking for overshoot of a first overvoltage value or/and a second overvoltage value or/and a third overvoltage value, in particular on the grid side,
- checking for undershoot of a first undervoltage value, in particular on the grid side,
- checking for overshoot of a first temperature limit value or/and a second temperature limit value or/and a third temperature limit value,
- checking for parameters of the load-side terminal, in particular for undershoot of a load-side first or/and second resistance value or load-side first or/and second impedance value.

14. Circuit breaker (SG) according to Patent Claim 13,
**characterized**
**in that** depending on the parameters checked:
if the first overvoltage value is exceeded, overvoltage information is issued,
if the second overvoltage value is exceeded, the electronic interruption unit is prevented from being set to low resistance, if the third overvoltage value is exceeded, the contacts are opened,
if the first undervoltage value is undershot, undervoltage information is issued or/and the electronic interruption unit remains at high resistance, in particular if the voltage level is greater than a second undervoltage value,
if the first temperature limit value is exceeded, temperature information is issued,
if the second temperature limit value is exceeded, the electronic interruption unit remains at high resistance,
if the third temperature limit value is exceeded, the contacts are opened,
if the load-side first resistance value or the load-side first impedance value is undershot, impedance information is issued,
if the load-side second resistance value or the load-side second impedance value is undershot, the electronic interruption unit remains at high resistance.

15. Circuit breaker (SG) according to any of the preceding patent claims,
**characterized**
**in that** the circuit breaker is designed in such a way that, when the handle is actuated for opening the contacts, a signal is sent to the control unit (SE) before the contacts are opened, so that the switching elements of the electronic interruption unit (EU) are placed in a high-resistance state,
**in that** the control unit (SE) stores at least one current value or current-time value of the current flow in the low-voltage AC circuit in a grid voltage-independent memory.

16. Circuit breaker (SG) according to any of the preceding patent claims,
**characterized**
**in that** the circuit breaker is designed in such a way that, if a current limit value or/and current-time limit value is exceeded, the switching elements of the electronic interruption unit (EU) are placed in a high-resistance state to prevent a current flow in the low-voltage AC circuit,
**in that**, depending on the adjustable configuration of the circuit breaker, in addition:
- the contacts of the mechanical isolating contact unit (MK) are opened or
- the switching elements remain in a high-resistance state and this state is indicated, in particular that setting of the switching elements to low resistance can be initiated by an input, or
- that the switching elements are set to low resistance after a first period of time or after a test of the load-side terminal, in particular a test of at least one electrical parameter of the load-side terminal, more specifically that a threshold value of the electrical parameter has been undershot or exceeded.

17. Circuit breaker (SG) according to any of the preceding patent claims,
**characterized**
**in that** the circuit breaker is designed in such a way that, if a fault is detected in a unit of the circuit breaker, the switching elements of the electronic interruption unit are placed in a high-resistance state to prevent a current flow in the low-voltage AC circuit,
and that also the contacts of the mechanical isolating contact unit are opened and the mechanical isolating contact unit is placed in a blocked state by means of a blocking signal, so that the contacts are prevented from being closed again.

18. Circuit breaker (SG) according to any of the preceding patent claims,
**characterized**
**in that** the circuit breaker is designed in such a way that, in the event of a power failure of the electric low-voltage AC circuit, the mechanical isolating contact unit remains in its switching state, so that, in the event of a power failure after the contacts have been closed, the contacts remain closed after the power supply has been restored.

19. Circuit breaker (SG) according to any of the preceding patent claims,
**characterized**
**in that** the control unit (SE) has a microcontroller.

20. Method for operating a circuit breaker (SG) having a series circuit consisting of a mechanical isolating contact unit (MK) and an electronic interruption unit (EU), wherein the mechanical isolating contact unit (MK) is arranged on the grid side and the electronic interruption unit (EU) is arranged on the load side, the mechanical isolating contact unit (MK) has a handle for opening and closing contacts,
wherein the level of the current in the low-voltage AC circuit is determined and, if current limit values or/and current-time limit values are exceeded, prevention of a current flow in the low-voltage AC circuit is initiated,
a power supply unit for supplying power to the circuit breaker is provided, which is connected to conductors of the low-voltage AC circuit between the isolating contact unit (MK) and the interruption unit (EU),
that the contacts of the mechanical isolating contact unit (MK) are closed by means of the handle during a power-on operation, wherein switching elements of the electronic interruption unit (EU) are in the high-resistance state,
on closure of the contacts, power is supplied to the power supply unit, which causes a checking function of the circuit breaker to be performed,
and, if the result of the checking function is positive, the electronic interruption unit is placed in a low-resistance state so that load-side terminals of the circuit breaker are supplied with power.

## Revendications

1. Disjoncteur (SG) pour la protection d'un circuit électrique à courant alternatif basse tension présentant :
- un boîtier (GEH) avec des bornes côté réseau (L1, N1) et des bornes côté charge (L2, N2) pour les conducteurs du circuit à courant alternatif basse tension,
- une unité de contact de coupure mécanique (MK) reliée aux bornes côté réseau (L1, N1), qui est reliée par ailleurs à une unité d'interruption électronique (EU), qui est reliée par ailleurs aux bornes côté charge (L2, N2),
de sorte que par des contacts fermés de l'unité de contact de coupure et l'état à basse impédance des éléments de commutation à semi-conducteurs de l'unité d'interruption électronique rendent possible un passage de courant dans le circuit à courant alternatif basse tension ou
grâce aux contacts ouverts de l'unité de contact de coupure mécanique, une isolation galvanique est rendue possible par un évitement d'un passage de courant dans le circuit à courant alternatif basse tension et/ou, grâce à un état à haute impédance des éléments de commutation, un évitement d'un passage de courant dans le circuit à courant alternatif basse tension est rendu possible,
- l'unité de contact de coupure mécanique présente un organe de manœuvre pour la fermeture et l'ouverture des contacts,
- une unité de détection de courant (SI), disposée dans un conducteur placé en aval de l'unité de contact de coupure, pour déterminer la valeur du courant du circuit à courant alternatif basse tension,
- une unité de commande (SE), qui est reliée à l'unité de détection de courant (SI), à l'unité d'interruption électronique (EU) et à l'unité de contact de coupure mécanique (MK), dans lequel le disjoncteur (SG) est conçu de telle sorte que
en cas de dépassement des valeurs limites de courant et/ou de courant-temps, un évitement d'un passage de courant dans le circuit à courant alternatif basse tension est initié,
- une unité d'alimentation (NT) pour l'alimentation en énergie du disjoncteur (SG) qui est raccordée à des conducteurs du circuit à courant alternatif basse tension entre l'unité de contact de coupure (MK) et l'unité d'interruption (EU),
- le disjoncteur (SG) est conçu de telle sorte que,
lors d'un procédé d'enclenchement, les contacts de l'unité de contact de coupure mécanique (MK) sont fermés à l'aide de l'organe de manœuvre, les éléments de commutation de l'unité d'interruption électronique (EU) se trouvent dans un état à haute impédance,
la fermeture des contacts alimente l'unité d'alimentation en énergie, ce qui alimente l'unité de commande (SE) en énergie, l'unité de commande (SE) exécute une fonction de vérification du disjoncteur, en cas de résultat positif de la fonction de vérification, les éléments de commutation de l'unité d'interruption électronique (EU) sont placés dans un état à basse impédance, de sorte que les bornes côté charge sont alimentées en énergie du circuit à courant alternatif basse tension.

2. Disjoncteur (SG) selon la revendication 1,
**caractérisé en ce que**
une unité de détection de tension (SU) reliée à l'unité de commande (SE) est prévue pour déterminer la valeur de la tension entre les conducteurs du circuit à courant alternatif basse tension entre l'unité de contact de coupure et l'unité d'interruption.

3. Disjoncteur (SG) selon la revendication 1 ou 2,
**caractérisé en ce que**
l'unité de contact de coupure mécanique présente une unité d'indication de la position des contacts, en particulier une unité mécanique d'indication de position.

4. Disjoncteur (SG) selon la revendication 1, 2 ou 3,
**caractérisé en ce que** le disjoncteur présente une unité d'affichage (AE), reliée à l'unité de commande (SE), qui indique en particulier un état de commutation à haute impédance ou à basse impédance de l'unité d'interruption électronique.

5. Disjoncteur (SG) selon l'une des revendications précédentes,
**caractérisé en ce que**
le disjoncteur présente une unité de communication (COM), reliée à l'unité de commande (SE), qui permet en particulier une possibilité de communication sans fil.

6. Disjoncteur (SG) selon l'une des revendications précédentes,
**caractérisé en ce que**
une unité de détection de courant différentiel, reliée à l'unité de commande, est prévue pour déterminer un courant différentiel des conducteurs du circuit à courant alternatif basse tension.

7. Disjoncteur (SG) selon l'une des revendications précédentes,
**caractérisé en ce que**
le disjoncteur est conçu de telle sorte que, lors de l'actionnement de l'unité de contact de coupure mécanique à l'aide de l'organe de manœuvre, un signal est envoyé à l'unité de commande (SE) avant l'ouverture des contacts, de sorte que celle-ci place les éléments de commutation à semi-conducteurs de l'unité d'interruption électronique (EU) dans un état à haute impédance.

8. Disjoncteur (SG) selon l'une des revendications précédentes,
**caractérisé en ce que**
l'unité de contact de coupure mécanique (MK) est conçue de telle sorte que, après une application unique d'un signal de blocage, provenant en particulier de l'unité de commande (SE), une fermeture des contacts par l'organe de manœuvre est empêchée.

9. Disjoncteur (SG) selon l'une des revendications précédentes,
**caractérisé en ce que**
l'unité de contact de coupure mécanique (MK) est conçue de telle sorte que les contacts peuvent être ouverts par l'unité de commande (SE), mais ne peuvent pas être fermés,
en particulier les contacts peuvent être ouverts même lorsque l'organe de manœuvre est bloquée.

10. Disjoncteur (SG) selon l'une des revendications précédentes,
**caractérisé en ce que**
un élément de protection, en particulier un fusible, est monté en amont de l'unité d'alimentation.

11. Disjoncteur (SG) selon l'une des revendications précédentes,
**caractérisé en ce que**
la fonction de vérification présente un autotest de la capacité de fonctionnement du disjoncteur,
au cours duquel au moins un composant, en particulier plusieurs composants, d'une unité, en particulier de plusieurs unités, du disjoncteur est contrôlé,
et en cas de capacité de fonctionnement de l'au moins un composant, en particulier de plusieurs composants, d'une unité, en particulier de plusieurs unités, l'état à basse impédance est autorisé.

12. Disjoncteur (SG) selon la revendication 11,
**caractérisé en ce que**
en cas d'absence de capacité de fonctionnement, les contacts de l'unité de contact de coupure mécanique (MK) sont ouverts,
en particulier, au préalable ou parallèlement, une nouvelle fermeture des contacts est empêchée par un signal de blocage.

13. Disjoncteur (SG) selon la revendication 11 ou 12,
**caractérisé en ce que**
la fonction de vérification comprend une vérification d'au moins un paramètre électrique de la borne côté charge ou de la borne côté réseau,
en particulier la fonction de vérification exécute une vérification d'au moins un, en particulier de plusieurs ou de la totalité, des paramètres suivants :
- vérification pour détecter un dépassement, en particulier côté réseau, d'une première valeur de surtension, et/ou d'une deuxième valeur de surtension, et/ou d'une troisième valeur de surtension,
- vérification pour détecter un sous-dépassement, en particulier côté réseau, d'une première valeur de sous-tension,
- vérification pour détecter un dépassement d'une première valeur limite de température, et/ou d'une deuxième valeur limite de température, et/ou d'une troisième valeur limite de température,
- vérification de paramètres de la borne côté charge, en particulier d'un sous-dépassement d'une première et/ou une deuxième valeur de résistance côté charge ou d'une première et/ou une deuxième valeur d'impédance côté charge.

14. Disjoncteur (SG) selon la revendication 13,
**caractérisé en ce que**
en fonction des paramètres contrôlés :
en cas de dépassement de la première valeur de surtension, une information de surtension est émise,
en cas de dépassement de la deuxième valeur de surtension, la mise dans un état à basse impédance de l'unité d'interruption électronique est empêchée,
en cas de dépassement de la troisième valeur de surtension, une ouverture des contacts a lieu,
en cas de sous-dépassement de la première valeur de sous-tension, une information de sous-tension est émise et/ou l'unité d'interruption électronique reste dans un état à haute impédance, en particulier si la valeur de la tension est supérieure à une deuxième valeur de sous-tension,
en cas de dépassement de la première valeur limite de température, une information de température est émise,
en cas de dépassement de la deuxième valeur limite de température, l'unité d'interruption électronique reste dans un état à haute impédance,
en cas de dépassement de la troisième valeur limite de température, une ouverture des contacts a lieu,
en cas de sous-dépassement de la première valeur de résistance côté charge ou de la première valeur d'impédance côté charge, une information d'impédance est émise,
en cas de sous-dépassement de la deuxième valeur de résistance côté charge ou de la deuxième valeur d'impédance côté charge, l'unité d'interruption électronique reste dans un état à haute impédance.

15. Disjoncteur (SG) selon l'une des revendications précédentes,
**caractérisé en ce que**
le disjoncteur est conçu de telle sorte que, lors d'un actionnement de l'organe de manœuvre pour une ouverture des contacts, un signal est envoyé à l'unité de commande (SE) avant l'ouverture des contacts, de sorte que les éléments de commutation de l'unité d'interruption électronique (EU) sont placés dans un état à haute impédance, et que
l'unité de commande (SE) enregistre au moins une valeur de courant ou une valeur de courant-temps du passage de courant dans le circuit à courant alternatif basse tension dans une mémoire indépendante de la tension du réseau.

16. Disjoncteur (SG) selon l'une des revendications précédentes,
**caractérisé en ce que**
le disjoncteur est conçu de telle sorte que, en cas de dépassement d'une valeur limite de courant et/ou d'une valeur limite de courant-temps, les éléments de commutation de l'unité d'interruption électronique (EU) sont placés dans un état à haute impédance en vue de l'évitement d'un passage de courant dans le circuit à courant alternatif basse tension,
en outre, selon la configuration réglable du disjoncteur :
- les contacts de l'unité de contact de coupure mécanique (MK) s'ouvrent, ou
- les éléments de commutation restent dans un état à haute impédance et un affichage de cet état a lieu, en particulier un passage en basse impédance des éléments de commutation peut être initié par une saisie, ou
- un passage en basse impédance des éléments de commutation a lieu après un premier intervalle de temps ou après une vérification de la borne côté charge, en particulier une vérification d'au moins un paramètre électrique de la borne côté charge, plus précisément en cas de sous-dépassement ou de dépassement d'une valeur seuil du paramètre électrique.

17. Disjoncteur (SG) selon l'une des revendications précédentes,
**caractérisé en ce que**
le disjoncteur est conçu de telle sorte qu'en cas de détection d'un défaut d'une unité du disjoncteur, les éléments de commutation de l'unité d'interruption électronique sont placés dans un état à haute impédance en vue de l'évitement d'un passage de courant dans le circuit à courant alternatif basse tension,
en outre, les contacts de l'unité de contact de coupure mécanique sont ouverts et l'unité de contact de coupure mécanique est placée dans un état bloqué au moyen d'un signal de blocage, de sorte qu'une nouvelle fermeture des contacts est empêchée.

18. Disjoncteur (SG) selon l'une des revendications précédentes,
**caractérisé en ce que**
le disjoncteur est conçu de telle sorte qu'en cas de coupure d'alimentation du circuit électrique à courant alternatif basse tension, l'unité de contact de coupure mécanique reste dans son état de commutation, de sorte que, dans le cas de contacts fermés puis d'une coupure d'alimentation, les contacts restent fermés après le rétablissement de l'alimentation énergétique.

19. Disjoncteur (SG) selon l'une des revendications précédentes,
**caractérisé en ce que**
l'unité de commande (SE) présente un microcontrôleur.

20. Procédé de fonctionnement d'un disjoncteur (SG) avec un montage en série d'une unité de contact de coupure mécanique (MK) et d'une unité d'interruption électronique (EU), dans lequel l'unité de contact de coupure mécanique (MK) est disposée côté réseau et l'unité d'interruption électronique (EU) est disposée côté charge,
l'unité de contact de coupure mécanique (MK) présente un organe de manœuvre pour la fermeture et l'ouverture de contacts,
dans lequel la valeur du courant du circuit à courant alternatif basse tension est déterminée et, en cas de dépassement de valeurs limites d'intensité et/ou de courant-temps, un évitement d'un passage de courant dans le circuit à courant alternatif basse tension est initié,
une unité d'alimentation pour l'alimentation en énergie du disjoncteur est prévue, celle-ci est raccordée à des conducteurs du circuit à courant alternatif basse tension entre l'unité de contact de coupure (MK) et l'unité d'interruption (EU),
lors d'un procédé d'enclenchement, les contacts de l'unité de contact de coupure mécanique (MK) sont fermés à l'aide de l'organe de manœuvre, dans lequel les éléments de commutation de l'unité d'interruption électronique (EU) sont dans un état de haute impédance, l'unité d'alimentation est alimentée en énergie avec la fermeture des contacts, ce qui permet d'exécuter une fonction de vérification du disjoncteur
et, en cas de résultat positif de la fonction de vérification, l'unité d'interruption électronique est placée dans un état à basse impédance, de sorte que les bornes côté charge du disjoncteur sont alimentées en énergie.
